# EUROPEAN PATENT SPECIFICATION

(11) **EP 1 417 889 B1**
(45) Date of publication and mention of the grant of the patent: **07.06.2006**
(21) Application number: 03025538.4
(22) Date of filing: 07.11.2003
(51) Int. Cl.: A22B 7/00

(54) **Device and method for fixation of carcases**
Vorrichtung und Verfahren zum Festhalten von Schlachttierkörpern
Appareil et procédé d'immobilisation de carcasses

(30) Priority: 08.11.2002 DK 200201722
(43) Date of publication of application: 12.05.2004
(73) Proprietor: Slagteriernes Forskningsinstitut, 4000 Roskilde (DK)
(72) Inventor: Hansen, Niels Worsoe, 4320 Lejre (DK); Jensen, Niels R., 2900 Hellerup (DK)
(74) Representative: Hoffmann, Claus

(56) References cited:
- EP-A- 0 545 501
- NL-C- 1 014 060
- US-B1- 6 244 951

## Description

The present invention relates to a device and a method for use in a slaughtering line for handling of a carcase consisting of two interconnected carcase halves, which are hung in at least one gambrel or hook.

### Prior art

Carcases in a slaughtering line may comprise two interconnected carcase halves, which are hung in one or more gambrels or hooks. The carcases halves may hang together in the snout, in a piece of the fat of the neck or be completely separate. The head may in certain cases be cut off early at the line of slaughtering for hygiene purposes. The present invention relates to the handling of carcase after they have been mid-split and thereby consist of carcase halves as described above.

The devices for fixating of carcase halves during an automated treatment is often used in slaughtering lines. The carcases are most often hung in the hind legs, so that the front part hangs loose below.

Such slaughtering lines must be able to handle all shapes and sizes of carcases, for which reason measuring equipment has been designed for measuring the size of the carcase or position of the anatomical points in respect of the point of hanging. The automated treatment processes may thereby be adjusted in order to ensure sufficiently accurate performance in relation to that particular carcase.

350 or more animals are often slaughtered in a slaughtering line per hour, which corresponds to a step time of about 10 seconds from arrival to a treatment station until arrival to the next. Within this period of time up to several treatment processes have to be carried out, just as the tools and parts of equipment, which are in touch with the carcase, have to be washed for hygienical reasons. Furthermore, this high number of carcases causes the front part to have some non-controlled movements owing to the inertia caused by the rapid movement, which is due to of acceleration and deceleration from one treatment station to the next.

Furthermore, the carcase halves are more movable, if the two halves are not interconnected. Thus, it is more difficult to control the carcase halves than the carcases and thereby also the fixation processes and treatment processes which follow subsequently.

Thus, it has proven to be difficult in prior art to fixate or retain the carcase, when this has been mid-split and thereby consists of two interconnected carcase halves.

From Danish patent application No. PA 1993 00471 a device for fixation of a carcase is known, which is hung in the rear end. The fixation relates to the holding of the carcase in a position previous to a cutting process, which is performed by fixating the head concurrently with the exposing of the carcase to a pull downwards, so that the carcase is stretched out and fixated. The cutting process relates to a longitudinal cut through of the carcase, which means that the fixation in this device has been arranged for the entire carcase.

An apparatus for configuring an animal carcass is known from US 6.244.951. The apparatus comprises a frame, a carriage, a connecting member, first and second opposable arms and a drive mechanism. The apparatus is for configuring the animal carcass for processing by a leaf lard puller.

The object of the present invention is thus to provide a device, which, essentially in the same movement, is capable of fixating and pivoting two interconnected carcase halves, whereby the inner side of the carcase halves is exposed to or made available for a subsequent treatment process.

Furthermore, the object of the present invention is to provide a device for fixation of the carcase halves, so that the mobility is rapidly controlled and the carcase halves are maintained.

A further object of the present invention is to provide a device for fixating and pivoting different sizes of carcase halves.

### Summary of the invention

The present invention is new and characteristic in that the device according to claim 1 comprises a movable arrangement, which is connected to two holding means. Furthermore, the arrangement may be moved towards the movable path of the carcase and has been arranged to bring the holding means in contact with each of their carcase halves. In addition, the holding means is arranged to fixate the carcase halves, and is pivotally connected with the arrangement and furthermore arranged to pivot the carcase halves opposite one another to a working position.

It is hereby obtained that the carcase halves are fixated and furthermore that they are pivoted, so that the inner side of the carcase halves is opened and thereby is exposed previous to a subsequent treatment process. Hereby a simple construction for fixation and pivoting of carcase after they have been mid-split is obtained, which is easy to incorporate in the existing slaughtering line in the positions, where the inner side of the carcase halves is to be treated. A further advantage is that it is possible to automate the treatment processes, which were previously manual and hereby very time-consuming.

Treatment processes which are possible to automate by the present invention are, among other things, cleaning of the neck, cleaning of intestines remains, cleaning of heart fat from the carcase half and cleaning of leaf remains from the carcase half.

By the movable path of the carcase is meant that path which follows the two interconnected carcase halves in the slaughtering line during the carrying through of various treatment processes. The movable path of the carcase is substantially identically with the course of the conveyor.

By working position is meant that the carcase is available for a subsequent working process, also called a treatment process.

During use the arrangement has been arranged to lead the holding means forward to the carcase halves, so that the holding means are initially led into engagement around each of their carcase halves. Hereby the carcase halves are fixated, whereby possibility is given to stop/decelerate the uncontrolled movements in the carcase halves, because there is a certain clearance between the single carcase half and the holding means previous to the fixation. When the carcase halves are subsequently pivoted opposite one another to a working position, the inner side of the single carcase half is exposed, so that its inner side no longer turns towards the other interconnected carcase half. It is hereby possible to carry out treatment processes automatically which were previously manual.

In a advantageous embodiment according to the present invention each holding means may comprise a control part and a resting part, which may be moved towards one another for fixation of the carcase half. Hereby it is obtained, that any movements on the grounds of inertia, i.e. that movement energy, which is in the carcase half of the movement from one position to the next, may be handled in a more advantageous way than that of the existing known devices, because the control part and the resting part firstly diminish the movement of the carcase half and subsequently seize around, stabilize and maintain the carcase halves.

In another advantageous embodiment the holding means is pivoted 5°-250°, preferably 80°-120° in relation to one another. During use the holding means may be pivoted from an angle of around 0° to an angle of preferably 80°-120° in relation to one another after or concurrently with the fixation of the carcase halves in the holding means. By pivoting until an angle of 80°-120° it is obtained, besides exposure of the inner side of the carcase half previous to a subsequent treatment process, that the treatment process may be commenced before than in the case of by pivoting up to 120°-250°, because the carcase half is moved less. Hereby it is obtained that the time needed for handling the carcase is minimized.

In a further expedient embodiment at least a rack may be arranged on the arrangement and at least gear wheel on the control part and the resting part, so that the control part and resting part are pivoted by movement of the rack of the arrangement. Hereby a very simple rotation mechanism is obtained, which is secure and rapid in use.

In other preferable embodiments the arrangement is moved as a telescopic arm, cylinder piston, via rails, pivotal parts and/or the like. Hereby it is obtained that the present invention may fit several different treatment processes by replacing linear moving parts with rotating parts and the other way around.

In further expedient embodiments the arrangement may be moved by means of pneumatics, servomotors, hydraulics and/or the like.

In a preferred embodiment the arrangement may comprise a parallelogram construction for movement towards the movable path of the carcase. Hereby a construction of the arrangement is obtained, which does not occupy much space in the direction perpendicularly away from the movable path of the carcase.

Furthermore, the device may comprise a plurality of hydraulic cylinders, where a first cylinder at least is arranged for moving the arrangement towards the movable path of the carcase, where a second cylinder is arranged for pivoting the control parts and where a third cylinder is arranged for pivoting the resting parts.

Advantageously, the device comprises means, which are arranged for moving the device in a sideways direction, substantially parallel to the movable path of the carcase. Hereby is obtained that the device may seize and fixate the carcase halves in an early state, so that there is essentially control of the movements of the carcase previous to the subsequent slaughtering process is to be carried out.

Furthermore, there may be arranged further means for accelerating of the carcase in relation to its normal speed through the slaughtering line. Hereby is obtained that the step time through the slaughtering line substantially may be maintained even though the carcase often during the carrying out of the slaughtering process is not moved. In other words an accumulation of carcases at the entrance of the device does not occur.

In an other advantageous embodiment according to the present invention the control part is pivoted towards the resting part to a squeezing fixation of the carcase half. Subsequently, the resting part performs a pivoting movement together with the control part to the said working position. In other embodiments it may be the opposite situation, where it is the resting part which is pivoted until a squeezing fixation with the control part.

In a further expedient embodiment the arrangement is further moved forward after complete or partly fixation of the carcase halves in the holding means perpendicular to the movable path of the carcase and thereby the holding means is pivoted opposite one another. Hereby it is obtained, that the present invention may be time-saving by carrying out only a partly fixation of the carcase halves previous to the actual pivoting movement.

By complete fixation is meant that the control part and the resting part is pushing from each of their sides of the carcase half, so that the carcase half is firmly fixated in the movable path of the carcase half, i.e. the transverse direction of the longitudinal direction of the carcase half. By partly fixation is meant that the arrangement has led the holding means in contact with the carcase half, so that the carcase half is between the control part and the resting part, but these parts do not push towards the carcase half from each of their sides.

When the carcase halves have been fixated and pivoted and preferably are in the plane of the conveyor path, a tool is led from the opposite side towards the inner side of the carcase half and treats these when a contact has been obtained e.g. cleans the neck area. The leading of the tool may occur by means of a manipulator. The device according to the invention may also be used for fixation of the carcase halves, which is to be treated manually or automatically.

Furthermore, the present invention relates to a method for use in a slaughtering line for handling of a carcase according to claim 11, in which the method comprises the possibility to move an arrangement, which is in connection with two holding means, towards the movable path of the carcase half and by bringing the holding means in contact with each of their carcase halves, the possibility to fixate the carcase halves by means of the holding means and the possibility to pivot the carcase halves opposite one another to a working position by pivoting of the holding means on the arrangement.

Furthermore, the arrangement and the holding means are preferably moved in a sideways direction, substantially parallel to the movable path of the carcase.

Furthermore, the carcase may be expedient accelerated in relation to its normal speed through the slaughtering line.

### Briefly description of the drawing.

The invention is explained in details below with reference to particularly preferred embodiments and drawing, in which
Fig. 1a and 1b show an embodiment of the device according to the present invention previous to, that the arrangement brings the holding means in contact with the carcase halves. The device is shown seen from above in Fig. 1a and from the side in Fig. 1b.
Fig. 2a and 2b show an embodiment of the device according to the present invention, where the arrangement has brought the holding means in contact with the carcase halves. The device is shown seen from above in Fig. 2a and from the side in Fig. 2b.
Fig. 3a and 3b show an embodiment of the device according to the present invention, where the arrangement has brought the holding means in contact with the carcase halves, and where the control part is moved until fixation of the carcase halves. The device is shown seen from above in Fig. 3a and from the side in Fig. 3b.
Fig. 4a and 4b show an embodiment of the device according to the present invention, where the control part is moved until fixation of the carcase halves, and the arrangement has moved the fixated carcase halves perpendicularly further forward towards the movable path of the carcase half and towards a treatment tool, which is not shown. The device is shown seen from above in Fig. 4a and from the side in Fig. 4b.
Fig. 5a and 5b show an embodiment of the device according to Fig. 4a and 4b, where the arrangement is moved further forward, so that the holding means has pivoted the carcase halves. The device is shown seen from above in Fig. 5a and from the side in Fig. 5b.
Fig. 6 shows in perspective another embodiment of the device according to the invention.
Fig. 7 shows in perspective the embodiment from Fig. 6 seen from the side.
Fig. 8 and 9 show in perspective further embodiments of the holding means for use in the embodiments of the device shown in Fig. 6.

All figures are schematically and properly not in scale, and they show only the parts, which are necessary for clarifying the invention, whereas the other parts have been omitted or merely intimated. The same reference numbers has been utilized in all figures about identical and corresponding details.

### Detailed description of preferred embodiments

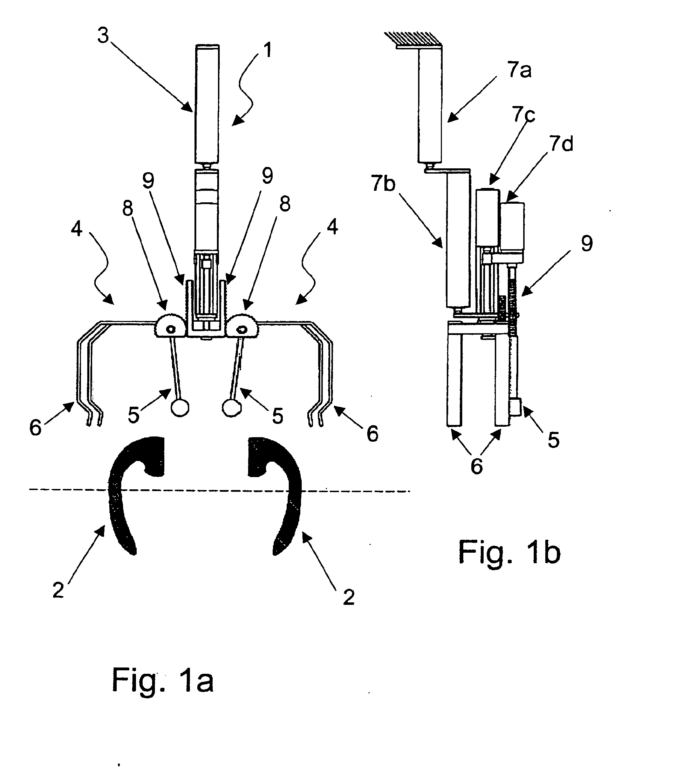

Fig. 1a and 1b show a device 1 for use in a slaughtering line according to the present invention. The device 1 comprises a movable arrangement 3 with two holding means 4, where the arrangement 3 may be moved towards the movable path of the carcase 2, which is here indicated by a dotted line. By carcase is for example meant pig carcases.

The carcase halves 2 are shown mid-split and thereby as a cross section. The holding means 4 consists of a control part 5 and a resting part 6, which have been placed in that end of the arrangement 3, which is closest to the carcase 2. The opposite end of the arrangement 3 is stationary, except for the fact that it may e.g. be moved up and down in an adjustment to the size and the position of the carcase half 2.

Furthermore, the resting part 6 is shown fork-shaped with an upper and a lower prong, but the resting part may in other embodiments take other shapes, e.g. a entire plate, grating, rod, pipe etc. Likewise, the control part 5 is here shown as a rod with a round end, but may also take other forms such as a plate, pipe, grating, fork etc. It is however important in the designing of the control part and the resting part, that they do not possess sharp parts or edges, which may be cut or be stocked at the inner side of the carcase halves during the use. Furthermore, the resting part 6 is shown as having a trapeze-like shape and the control part 5 as a straight rod, which parts in other embodiments may take other shapes depending on use and the size of the carcases.

In this embodiment the arrangement 3 comprises several cylinders 7 (7a, 7b, 7c and 7d), which has been arranged to in turn move the arrangement 3 towards the movable path of the carcase 2 as a telescopic arm, and brings with it the holding means 4 in contact with each of their carcase halves 2. The arrangement 3 may in other embodiments be moved via rails, pivotally parts or the like. Furthermore, the arrangement 3 is moved by means of different means such as by the aid of pneumatics, servomotors, hydraulics or the like. In this embodiment the arrangement 3 is moved by pneumatics in form of air cylinders 7.

In Fig. 1a and 1b the holding means 4 is shown in a starting position at an angle of 0° in relation to one another. Likewise, both the control part 5 and the resting part 6 are shown in starting positions at an angle of 0° in relation to one another.

In Fig. 1a and 1b it appears that on the arrangement 3 two racks 9 have been arranged and on each control part 5 a gear wheel 8, at whereby the movement of the front end of the arrangement 3, i.e. the cylinder 7d, and by that the rack 9 of the arrangement 3, the control part 5 is pivoted in that the gear wheel 8 on the control part is moved.

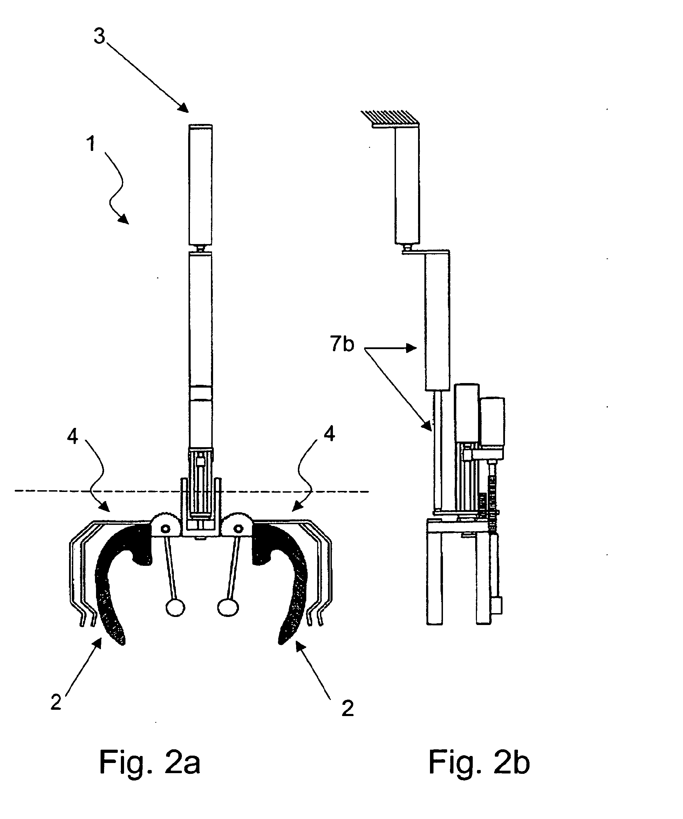

The holding means 4 is seen in Fig. 2a and 2b in contact with each of their carcase halves 2. This has been done by pushing forward the cylinder 7b, which forms part of the arrangement 3, so that the arrangement 3 has been extended. Thus, it is both the holding means 4, control part 5 with gear wheel 8, resting part 6 and that part of the arrangement 3, where upon the rack has been placed, which is pushed forward towards the movable path of the carcase half 2.

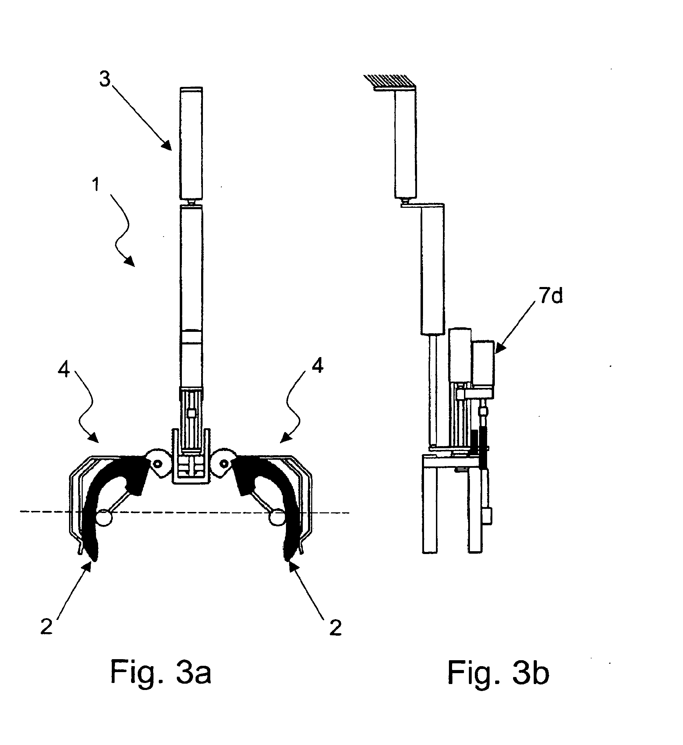

It appears as mentioned that each holding means 4 comprises a control part 5 and a resting part 6, which may be moved towards one another for fixation of the carcase half 2, which it appears from Fig. 3a and 3b. In this case the control parts 5 is pivoted towards the resting parts 6 into a fixation of the carcase halves 2. In this embodiment, shown in Fig. 3a, it is the control part 5, which in the first place is pivoted towards the resting part 6 until squeezing fixation of the carcase half 2 has been obtained. This turn of the control part 5 is carried out by displacing the cylinder 7d forward towards the movable path of the carcase half 2, in which the rack 9 is moved forward and the gear wheel 8 and the control part 5 are pivoted.

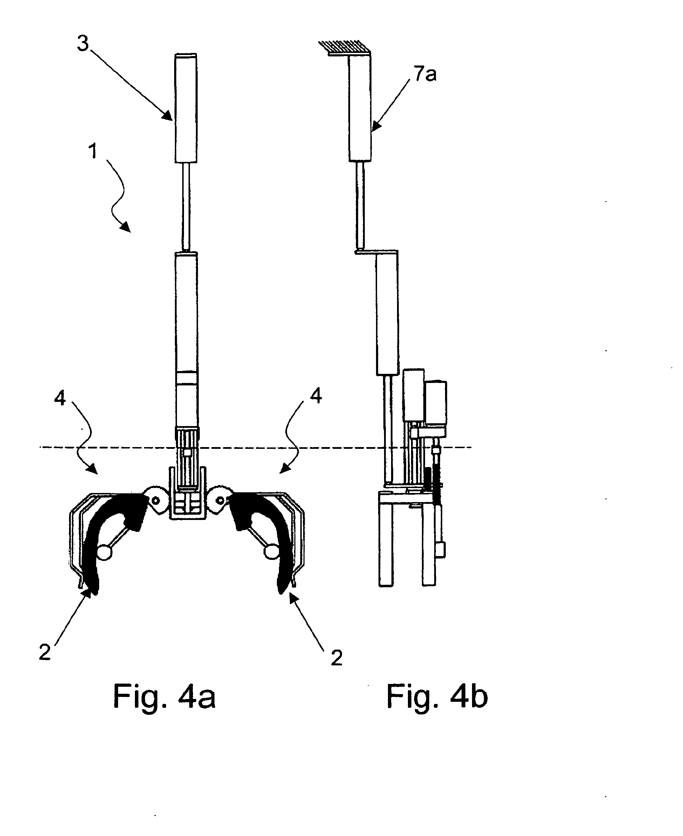

From Fig. 4a and 4b it appears that the arrangement 3 is further displaced forward and in that the carcase half 2 is further moved forward past the movable path of the carcase half 2, which essentially corresponds to the path of the conveyer of the slaughtering line. This is carried out so that the carcase halves 2 at the subsequently turn are not led behind this movable path and far away from treatment tool, which often comes from the opposite side of the movable path. This pushing forward of the carcase halves 2 occurs by the cylinder 7a pushing the entire arrangement 3 forward. The turn of the carcase halves 2 and the further displacement occur preferably concurrently, so that the carcase half 2 substantially remain in the vertical plane of the delivery path

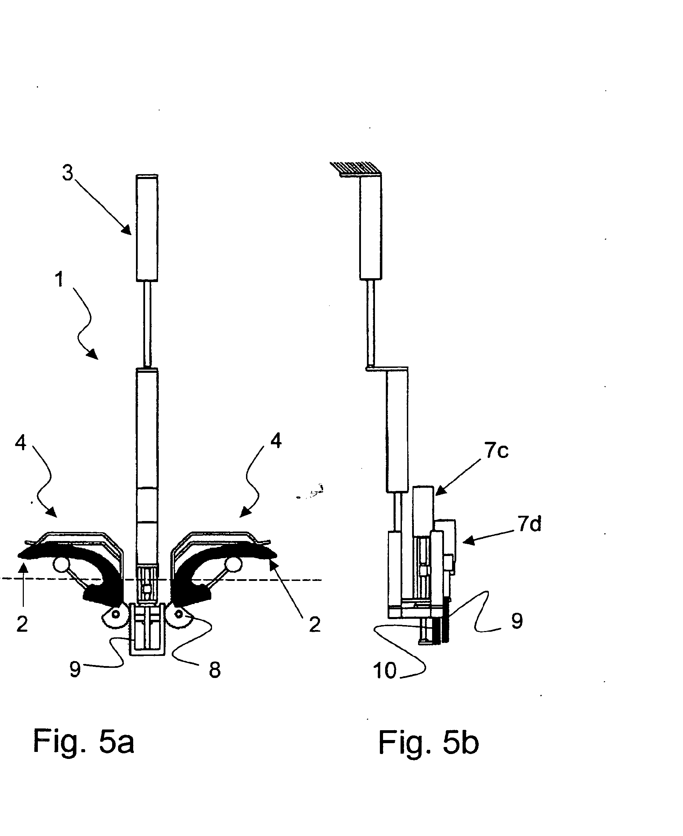

In Fig. 5a and 5b the holding means appear in a pivoted position, and it appears that the control part 5 presses on the inner side of the carcase 2 and the resting part 6 presses on the outer side of the carcase 2, so that the carcase halves are totally fixated. The turn is carried out in this embodiment by the cylinder 7c pushing the end of the arrangement 3, whereupon a rack 10 is placed, forward. The rack 10 is in connection with a gear wheel (not shown), which is in connection with the resting part 6. By this pushing forward of the cylinder 7c the entire resting part 6 is pivoted. Furthermore, the cylinder 7d is in connection with the cylinder 7c, at which the rack 9 is likewise moved forward. Hereby is obtained that the control part 5 is further pivoted, via gear wheel 8, together with the resting part 6, so that the carcase halves are maintained between the control part and the resting part during the entire turn.

The holding means 4 may be pivoted 5°-250°, preferably 80°-120° in relation to one another and the same holding means 4 is in Fig. 5a and 5b shown in pivoted position. By that the holding means 4 merely is pivoted 80°-250° in relation to one another the carcase halves 2 are merely partly opened, at which time is saved in the process in relation to a complete opening, where the carcase halves 2 are pivoted until 250°.

In a further expedient embodiment the fixation and the exposure of the carcase halves 2 last 1-15 sec., preferably 2-5 sec. Hereby an adjustment of the step time of the other processes on the slaughtering line is obtained, and some manual treatment processes are avoided.

The device 1 may be arranged to handle the carcases, which are brought to a standstill on the slaughtering line or may be arranged to follow a carcase, which is led at a normal speed on the line.

The device 1 may in the present invention function by moving the arrangement 3 from the starting position, see Fig. 1a and 1b, forward towards the movable path of the carcase 2, see Fig. 2a and 2b, so that the control part of the holding means 4 is pivoted until fixation of the carcase half 2 by a further movement of the arrangement 3, see Fig. 3a and 3b. Subsequently, the arrangement 3 is further extended towards past the movable path of the carcase 2, see Fig. 4a and 4b. Subsequent to this the arrangement is further moved forward, so that the rack 10 moves the gear wheel connected to the resting part, in which the resting part is pivoted, see Fig. 5a and 5b. The rack 9 is further in connection with a rack 10, in which the movement of the rack 10 will likewise move the rack 9, so that the control part 5 is pivoted, via the gear wheel 8.

Subsequently, the carcase halves according to the present invention are opened and the inner side of the carcase halves are exposed and brought in position to the further treatment process.

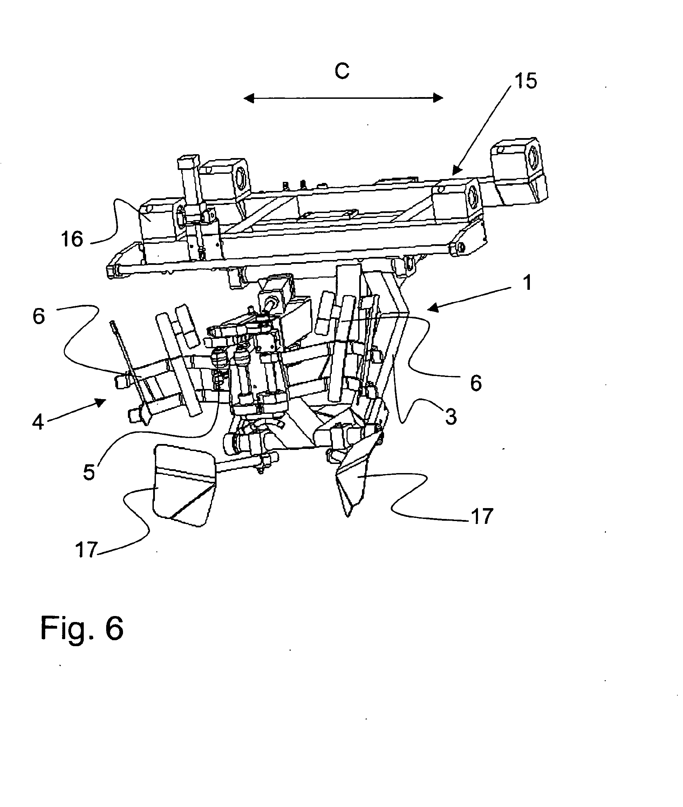

In Fig. 6 a further preferred embodiment of the device according to the invention is shown. The device is here shown in perspective seen from the front.

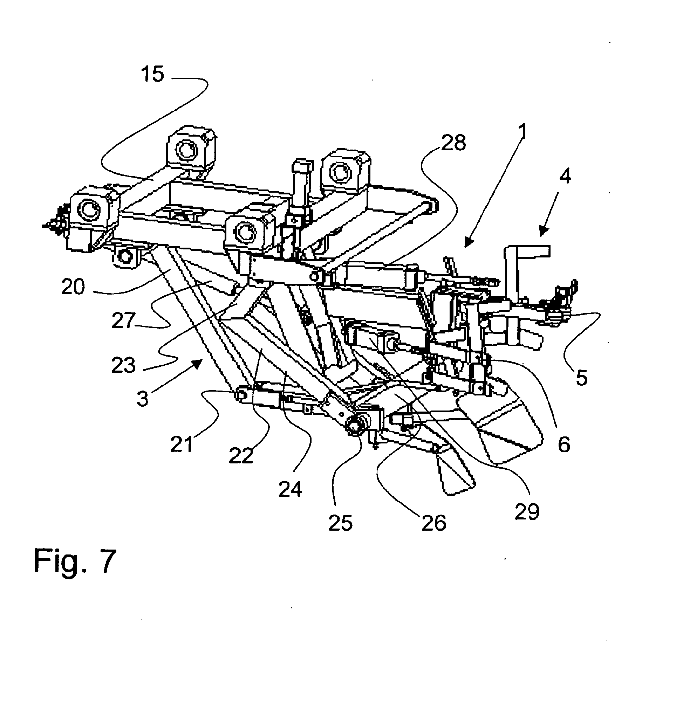

In the contrary to the above disclosed embodiment which substantially uses a forwarded linear movement of the arrangement 3, in form of a telescopic arm, the embodiment shown in Fig. 6 uses substantially a forwarded curved movement of the arrangement 3, here in form of a parallelogram construction. The actual structure of the embodiment will be described in more details in connection with Fig. 7.

In Fig. 6 the device 1 comprises a means 15 in form of a carriage, which may move in a sideways direction, indicated by the arrow C. The carriage 15 is designed as a rectangular frame, where in each corner bearings 16 are arranged through which transverse shafts (not shown) may extend, so that the carriage 15 may move on these shafts.

Furthermore, the frame has the function that it carries the entire device 1. The carriage 15 may have other geometric configurations.

The holding means 4 is here shown with the control parts 5 extending forward and the resting parts 6 being spread out to each of the side.

Furthermore, the device 1 comprises two support plates 17, which is arranged under the actual holding means 4. These support plates 17 is adjusted to support those parts of the carcase halves which isn't fixated and maintained of the holding means.

In Fig. 7 the device 1 is likewise shown in perspective seen from the side. The movable arrangement 3 comprises in this embodiment a first part 20, which is pivotally connected with the hindmost part of the frame 15. The part is extended slanting forward, down to a pivoting point 21, where after it continues substantially horizontally out towards the holding means 4.

Furthermore, the arrangement comprises a second part 22, which is pivotally connected to the front part of the frame 15. The part 22 has in this embodiment substantially in form of an angle. Thus, the first portion 23 of the part 22 is extending behind, down to an angle, where after the second portion 24 of the part 22 is extending forward and downward towards a pivoting part 25. The two portions 23 and 24 are substantially rigidly connected via the angle. Preferably, the device 3 has two separate parts 22 (only one is shown), whereby it is thus obtained that the arrangement 3 is not oscillated.

The two parts 20 and 22 end in a supporting arrangement 26, which is arranged to support the holding means 4.

In order to move the arrangement 3, the device 1 comprises a hydraulic cylinder 27, which extends from the hindmost part of the frame 15 and down to the supporting arrangement 26. By activating the cylinder 27 the two parts 20 and 22 are moved by the arrangement 3 and owing to their configuration the movement will substantially be curved. It is the parts 20 and 22 which essentially form the parallelogram construction.

Furthermore, in connection with the device 1 a second cylinder 28 is arranged, which is arranged to pivot the control parts 5, and a third cylinder 29, which is arranged to pivot the resting parts 6.

The mentioned cylinders 27, 28 and 29 may with advantage be controlled of a control unit (not shown), where the speed by means of which the different parts are moved along may be controlled independently of each other, which will be appreciated by a man skilled in the art.

The shown embodiment of the invention 1 in Fig. 6 and 7 has that advantage that it does not occupy a lot of space in a slaughtering line. Thus, it is simple to incorporate in already existing slaughtering lines without being necessary to create extra space for the movement of the arrangement 3 back and forward.

The device 1 is in this embodiment hung in a frame 15, which may move in a sideways direction but it may likewise be that the device is carried or supported by a firmly mounted frame. It may also be that the movable frame, instead of being hung, may be led on rails on the floor.

Furthermore, it has been proven expedient to arrange means (not shown), which may accelerate the carcase, i.e. its speed, when it reaches the device 1 and that slaughtering process, which is attached to the device. This has the advantage that the time of the entire process, i.e. maintaining, fixating, carrying out of the slaughtering process and the washing of the device 1 is lowered.

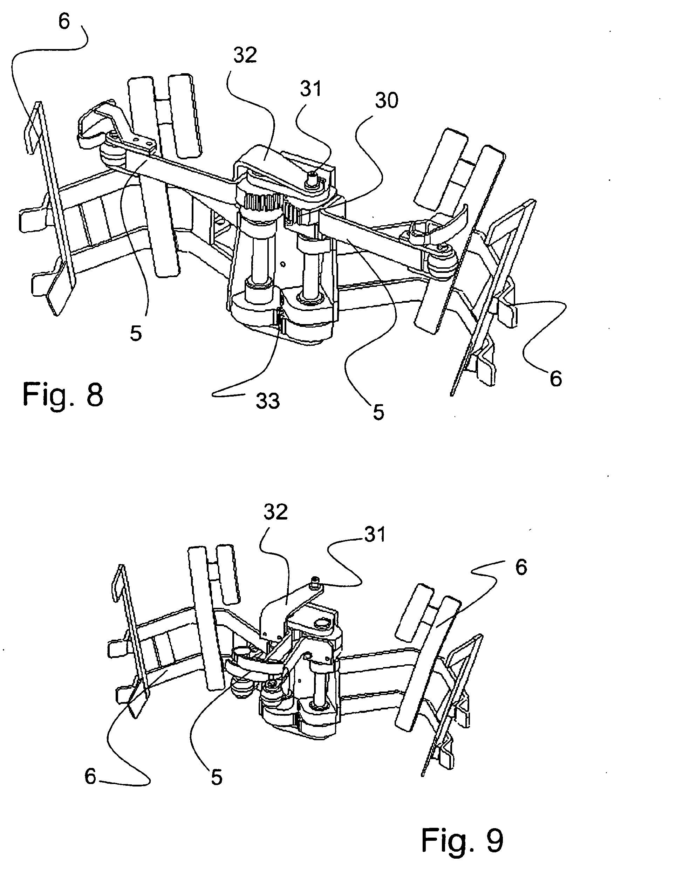

In Fig. 8 and 9 an embodiment of the holding means is shown, which preferable may be used in connection with the embodiment of the device 1 shown in Fig. 6 and 7.

The control parts 5 are shown spread to the side in Fig. 8. It appears evidently that at the ends of the control part 5, which turns away from the resting parts 6 gear wheels 30 are arranged. During the activation of the cylinder 28 (not shown), which are fastened at the pin 31 on the means 32, the means 32 is pivoted so that this moves the left of the control parts 5, whereby the right control part is likewise moving via the gear wheels 30, which are in engagement with one another. In Fig. 9 the control parts 5 are shown pivoted so that they now extend forward.

The resting parts 6 may in a corresponding way be pivoted by means of the gear wheel 33 and the cylinder 29 and thus will not now be described further.

When the treatment tool has been treated the carcase halves, which are fixated and pivoted by the above mentioned device, the carcase halves are released and the device is moved in reverse order of that described above.

At that point the carcase halves are released until the next set of carcase halves arrives to treatment station, the station is washed.

By use of the device according to the present invention for handling of carcase halves, a fixation of the carcase half is obtained, so that the mobility of the front part of the carcase half, just after the transport from one treatment station to the next, is rapidly controlled and the carcase half is maintained.

Furthermore, it is obtained by the use of the device to pivot the carcase halves substantially concurrently with fixation, so that the inner side of the carcase half is exposed to the subsequent treatment process.

Even though the invention above has been described in connection with preferred embodiments of the invention, it is obvious to a man skilled in the art that several modifications are possible without departing from the invention, which is defined by the following claims.

## Claims

1. A device (1) for use in a slaughtering line for handling of a carcase consisting of two interconnected carcase halves (2), which are hung in at least one gambrel or hook, wherein the device comprises a movable arrangement (3), which is connected with two holding means (4), which arrangement (3) is movable towards the movable path of the carcase (2) and is arranged to bring the holding means (4) in contact with each of their carcase halves (2), the holding means (4) are arranged to fixate the carcase halves (2) **characterised in that** the holding means (4) are pivotally connected with the arrangement (3) and furthermore arranged to pivot the carcase halves (2) opposite one another to a working position.

2. A device (1) according to claim 1, wherein each holding means (4) comprises a control part (5) and a resting part(6), which is movable towards one another for fixing of the carcase half (2).

3. A device (1) according to claim 2, wherein the holding means (4) are pivoted 5°-250°, preferably 80°-120° in relation to one another.

4. A device (1) according to claims 2-3, wherein at least a rack (9, 10) is arranged on the arrangement (3) and at least a gear wheel (8) is arranged on the control part (5) and the resting part (6), so that the control part (5) and the resting part (6) are pivoted by movement of the racks (9, 10) of the arrangement (3).

5. A device (1) according to any of the preceding claims, wherein the arrangement (3) is movable by means of pneumatics, servomotors, hydraulics and/or the like.

6. A device (1) according to any of the preceding claims, wherein the arrangement (3) is moved as a telescopic arm, via rails, pivotal parts and/or the like.

7. A device (1) according to claims 1, 2, 3 or 5, wherein the arrangement (3) comprises a parallelogram construction for moving towards the movable path of the carcase.

8. A device (1) according to claim 7, wherein the arrangement (3) comprises a plurality of hydraulic cylinders, where a first cylinder (27) at least is arranged for moving the arrangement (3) towards the movable path of the carcase, where a second cylinder (28) is arranged to pivot the control parts (5) and where a third cylinder (29) is arranged to pivot the resting parts (6).

9. A device (1) according to any of the preceding claims, wherein the device (1) comprises means (15, 16), which is arranged to move the device (1) in a sideways direction, substantially parallel with the movable path of the carcase.

10. A device (1) according to claim 7, wherein further means is arranged to accelerate the carcase in relation to this normal speed through the slaughtering line.

11. A method for use in a slaughtering line for the handling of a carcase consisting of two interconnected carcase halves (2), which is hung at least in one gambrel or hook, wherein the method comprises the movement of an arrangement (3), which is in connection with two holding means (4), towards the movable path of the carcase (2) to bring the holding means (4) in contact with each of their carcase halves (2), the fixation of the carcase halves (2) by means of the holding means (4), and rotation of the carcase halves (2) opposite one another to a working position by rotation of the holding means (4) on the arrangement (3).

12. A method according to claims 11, wherein the holding means (4) comprise a control part (5) and a resting part(6), which are movable towards one another for fixing of the carcase half (2), and wherein the holding means (4) are pivoted towards the resting part (6) for squeezing fixation of the carcase half (2), and subsequently the resting part (6) performs a pivotal movement together with the control part (5) to said working position.

13. A method according to claim 11 or 12, wherein the arrangement (3) after full or partly fixation of the carcase halves (2) in the holding means (4) is moved further forward towards the movable path of the carcase (2) and by it the holding means (4) are pivoted opposite one another.

14. A method according to claim 11, wherein the arrangement (3) and holding means (4) are moved in a sideways direction, substantially parallel to the movable path of the carcase.

15. A method according to claim 11, wherein the carcase is accelerated in relation to its normal speed through the slaughtering line.

16. Use of the device according to claims 1-10 for handling of a carcase consisting of two interconnected carcase halves (2), which is hung in at least one gambrel or hook in a slaughtering line.

## Patentansprüche

1. Einrichtung (1) zur Verwendung in einer Schlachtlinie zum Handhaben eines Schlachttierkörpers, der aus zwei verbundenen Schlachttierkörperhälften (2) besteht, die an mindestens einem Fleischhaken oder Haken aufgehängt sind, wobei die Einrichtung eine bewegbare Anordnung (3) umfasst, die mit zwei Haltemitteln (4) verbunden ist, wobei die Anordnung (3) auf den bewegbaren Pfad des Schlachttierkörpers (2) zu bewegbar und angeordnet ist, um die Haltemittel (4) in Kontakt mit jeder ihrer Schlachttierkörperhälften (2) zu bringen, wobei die Haltemittel (4) angeordnet sind, um die Schlachttierkörperhälften (2) zu befestigen, **dadurch gekennzeichnet, dass** die Haltemittel (4) schwenkbar mit der Anordnung (3) verbunden und weiterhin angeordnet sind, um die einander gegenüberliegenden Schlachttierkörperhälften (2) in eine Arbeitsposition zu schwenken.

2. Einrichtung (1) nach Anspruch 1, wobei jedes Haltemittel (4) ein Steuerteil (5) und ein ruhendes Teil (6) umfasst, die zum Befestigen der Schlachttierkörperhälfte (2) aufeinander zu bewegbar sind.

3. Einrichtung (1) nach Anspruch 2, wobei die Haltemittel (4) bezogen aufeinander um 5°-250°, vorzugsweise 80°-120° geschwenkt werden.

4. Einrichtung (1) nach Anspruch 2-3, wobei mindestens eine Halterung (9, 10) an der Anordnung (3) angeordnet ist und mindestens ein Zahnrad (8) an dem Steuerteil (5) und dem ruhenden Teil (6) angeordnet ist, so dass das Steuerteil (5) und das ruhende Teil (6) durch die Bewegung der Halterungen (9, 10) der Anordnung (3) geschwenkt werden.

5. Einrichtung (1) nach einem der vorangegangenen Ansprüche, wobei die Anordnung (3) durch Pneumatik, Servomotoren, Hydraulik und/oder dergleichen bewegbar ist.

6. Einrichtung (1) nach einem der vorangegangenen Ansprüche, wobei die Anordnung (3) als teleskopischer Arm über Schienen, Schwenkteile und/oder dergleichen bewegt wird.

7. Einrichtung (1) nach Anspruch 1, 2, 3 oder 5, wobei die Anordnung (3) eine Parallelogrammkonstruktion zum Bewegen auf den bewegbaren Pfad des Schlachttierkörpers zu umfasst.

8. Einrichtung (1) nach Anspruch 7, wobei die Anordnung (3) eine Mehrzahl hydraulischer Zylinder umfasst, wobei ein erster Zylinder (27) mindestens zum Bewegen der Anordnung (3) auf den bewegbaren Pfad des Schlachttierkörpers zu angeordnet ist, wobei ein zweiter Zylinder (28) angeordnet ist, um die Steuerteile (5) zu schwenken, und wobei ein dritter Zylinder (29) angeordnet ist, um die ruhenden Teile (6) zu schwenken.

9. Einrichtung (1) nach einem der vorangegangenen Ansprüche, wobei die Einrichtung (1) Mittel (15, 16) umfasst, die angeordnet sind, um die Einrichtung (1) in einer seitlichen Richtung im wesentlichen parallel zu dem bewegbaren Pfad des Schlachttierkörpers zu bewegen.

10. Einrichtung (1) nach Anspruch 7, wobei weitere Mittel angeordnet sind, um den Schlachttierkörper bezogen auf diese normale Geschwindigkeit durch die Schlachtlinie zu beschleunigen.

11. Verfahren zur Verwendung in einer Schlachtlinie zum Handhaben eines aus zwei verbundenen Schlachttierkörperhälften (2) bestehenden Schlachttierkörpers, der mindestens an einem Fleischhaken oder Haken aufgehängt ist, wobei das Verfahren die Bewegung einer Anordnung (3), die in Verbindung mit zwei Haltemitteln (4) steht, auf den bewegbaren Pfad des Schlachttierkörpers (2) zu, um die Haltemittel (4) in Kontakt mit jeder ihrer Schlachttierkörperhälften (2) zu bringen, die Befestigung der Schlachttierkörperhälften (2) durch die Haltemittel (4) und Drehung der einander gegenüberliegenden Schlachttierkörperhälften (2) in eine Arbeitsposition durch Drehung der Haltemittel (4) an der Anordnung (3) umfasst.

12. Verfahren nach Anspruch 11, wobei die Haltemittel ein Steuerteil (5) und ein ruhendes Teil (6) umfassen, die zum Befestigen der Schlachttierkörperhälfte (2) aufeinander zu bewegbar sind, und wobei die Haltemittel (4) zur Klemmbefestigung der Schlachttierkörperhälfte (2) auf das ruhende Teil (6) zu geschwenkt werden und das ruhende Teil (6) anschließend zusammen mit dem Steuerteil (5) eine Schwenkbewegung in die Arbeitsposition ausführt.

13. Verfahren nach Anspruch 11 oder 12, wobei die Anordnung (3) nach vollständiger oder teilweiser Befestigung der Schlachttierkörperhälften (2) in den Haltemitteln (4) weiter nach vorn auf den bewegbaren Pfad des Schlachttierkörpers (2) zu bewegt wird und die Haltemittel (4) **dadurch** einander gegenüberliegend geschwenkt werden.

14. Verfahren nach Anspruch 11, wobei die Anordnung (3) und Haltemittel (4) in einer seitlichen Richtung im wesentlichen parallel zum bewegbaren Pfad des Schlachttierkörpers bewegt werden.

15. Verfahren nach Anspruch 11, wobei der Schlachttierkörper bezogen auf seine normale Geschwindigkeit durch die Schlachtlinie beschleunigt wird.

16. Verwendung der Einrichtung nach Anspruch 1-10 zum Handhaben eines aus zwei verbundenen Schlachttierkörperhälften (2) bestehenden Schlachttierkörpers, der an mindestens einem Fleischhaken oder Haken in einer Schlachtlinie aufgehängt ist.

## Revendications

1. Un dispositif (1) pour utilisation sur une ligne d'abattage pour la manutention d'une carcasse constituée de deux demi-carcasses reliées entre elles (2), suspendues à au moins un jambier ou crochet, le dispositif comprenant un système mobile (3) relié à deux moyens de fixation (4), lequel système (3) est déplaçable vers la trajectoire mobile de la carcasse (2) et prévu de manière à mettre en contact les moyens de fixation (4) avec chacune de leurs demi-carcasses (2), et les moyens de fixation (4) étant disposés de manière à immobiliser les demi-carcasses (2), **caractérisé en ce que** les moyens de fixation (4) sont raccordés au système (3) de manière pivotable et, en outre, disposés de manière à faire pivoter les demi-carcasses (2) en vis-à-vis dans une position de travail.

2. Un dispositif (1) selon la revendication 1, dans lequel chaque moyen de fixation (4) comprend un élément de commande (5) et un élément d'appui (6) qui sont déplaçables l'un vers l'autre pour immobiliser la demi-carcasse (2).

3. Un dispositif (1) selon la revendication 2, dans lequel les moyens de fixation (4) pivotent de 5° à 250°, de préférence de 80° à 120° l'un par rapport à l'autre.

4. Un dispositif (1) selon les revendications 2-3, dans lequel au moins une crémaillère (9, 10) est prévue sur le système (3) et au moins une roue dentée (8) est prévue sur l'élément de commande (5) et l'élément d'appui (6) de sorte que l'élément de commande (5) et l'élément d'appui (6) soient pivotés par le mouvement des crémaillères (9, 10) du système (3).

5. Un dispositif (1) selon l'une quelconque des revendications précédentes, dans lequel le système (3) est déplaçable par des moyens pneumatiques, servomoteurs, hydrauliques et/ou similaires.

6. Un dispositif (1) selon l'une quelconque des revendications précédentes, dans lequel le système (3) est déplacé comme un bras télescopique, via des rails, pivots et/ou éléments similaires.

7. Un dispositif (1) selon les revendications 1, 2, 3 ou 5, dans lequel le système (3) se compose d'une structure en parallélogramme pour effectuer le mouvement vers la trajectoire mobile de la carcasse.

8. Un dispositif (1) selon la revendication 7, dans lequel le système (3) comporte une pluralité de vérins hydrauliques, au moins un premier vérin (27) étant prévu pour déplacer le système (3) vers la trajectoire mobile de la carcasse, un second vérin (28) étant prévu pour le pivotement des éléments de commande (5) et un troisième vérin (29) étant prévu pour le pivotement des éléments d'appui (6).

9. Un dispositif (1) selon l'une quelconque des revendications précédentes, dans lequel l'appareil (1) comporte des moyens (15, 16) prévus pour déplacer l'appareil (1) latéralement, de manière sensiblement parallèle à la trajectoire mobile de la carcasse.

10. Un dispositif (1) selon la revendication 7, dans lequel un autre moyen est prévu pour accélérer la carcasse par rapport à sa vitesse normale à travers la ligne d'abattage.

11. Un procédé pour utilisation sur une ligne d'abattage, destiné à la manutention d'une carcasse constituée de deux demi-carcasses (2) reliées entre elles, qui est suspendue à au moins un jambier ou crochet, le procédé consistant à déplacer un système (3), raccordé à deux moyens de fixation (4), vers la trajectoire mobile de la carcasse (2) pour mettre en contact les moyens de fixation (4) avec chacune de leurs demi-carcasses (2), à immobiliser les demi-carcasses (2) par les moyens de fixation (4), et à effectuer la rotation des demi-carcasses (2) l'une en face de l'autre vers une position de travail par rotation des moyens de fixation (4) sur le système (3).

12. Un procédé selon la revendication 11, dans lequel les moyens de fixation (4) comportent un élément de commande (5) et un élément d'appui (6) qui sont déplaçables l'un vers l'autre pour immobiliser la demi-carcasse (2), et dans lequel les moyens de fixation (4) pivotent vers l'élément d'appui (6) pour immobiliser la demi-carcasse (2) par serrage, puis l'élément d'appui (6) exécute un mouvement pivotant avec l'élément de commande (5) vers ladite position de travail.

13. Un procédé selon la revendication 11 ou 12, dans lequel le système (3), après immobilisation totale ou partielle des demi-carcasses (2) dans les moyens de fixation (4), est déplacé plus avant vers la trajectoire mobile de la carcasse (2), permettant le pivotement des moyens de fixation (4) l'un en face de l'autre.

14. Un procédé selon la revendication 11, dans lequel le système (3) et les moyens de fixation (4) sont déplacés latéralement, de manière sensiblement parallèle à la trajectoire mobile de la carcasse.

15. Un procédé selon la revendication 11, dans lequel la carcasse est accélérée par rapport à sa vitesse normale à travers la ligne d'abattage.

16. Utilisation du dispositif selon les revendications 1-10 pour la manutention d'une carcasse constituée de deux demi-carcasses (2) reliées entre elles, qui est suspendue à au moins un jambier ou un crochet sur une ligne d'abattage.
